# EUROPEAN PATENT APPLICATION

(11) **EP 2 077 684 A2**
(43) Date of publication of application: **08.07.2009**
(21) Application number: 09250002.4
(22) Date of filing: 02.01.2009
(51) Int. Cl.: H04W 12/06, H04L 29/06

(54) **Methods of and systems for offering and/or providing information**

(30) Priority: 04.01.2008 ES 200800010; 04.03.2008 GB 0804061
(71) Applicant: Wilico Wireless Networking Solutions, SA, 08005 Barcelona (ES)
(72) Inventor: Cedo Perinya, Josep, 08035 Barcelona (ES); Maso Mas, David, 80553 Seva (Barcelona) (ES); Dalmau Ballester, Marc, 08003 Barcelona (ES); Gil Lozano, Jose Manuel, 08820 El Prat De Llobregat Barcelona (ES); Reverter, Genar Codina, 08005 Barcelona (ES)
(74) Representative: Mabey, Katherine Frances

(57) **Abstract**

There is provided a method of selecting information, the method comprising attempting to authenticate a mobile device (8) at an authentication point (4,6) and in response to the authentication attempt, selecting information for provision to the mobile device (8). Preferably the selected information comprises an application, program or other means for activating one or more functions or applications of the mobile device (8) and/or comprises information, content or data or the like and furthermore preferably is customised for the mobile device (8) and/or based on information regarding the device (8) such as its location, etc. Preferably the selected information is provided to the mobile device (8) in response to a successful authentication, preferably via a short range, wireless communications interaction. The authentication process preferably comprises a payment transaction, such as the mobile device (8) being authorised to access a system (1), such as a metro system (1) in one example, in response to payment for access to the system (10) via the mobile device (8).

## Description

The present invention relates to methods of and systems for offering and/or providing information to, and for use with, mobile communications devices, particularly when such devices are in a particular area or "ecosystem".

It is has long been known to provide information services in both public and private environments, such as train or metro stations, shopping malls, etc., to enable people to obtain information, for example, about the environment and/or services that are available, etc.

Information can be provided using, for example, an electronic information display. These displays range from simple displays such as signs, instructions or other indicators, and provide the viewer with a limited amount of information such as directions, operating instructions, warnings, advertisements, product or service details, availability, status or timing information, etc. Such displays are useful but are limited in the information they can convey and if the information changes, the display needs to be replaced or updated. Furthermore the information displayed is usually generic and aimed at the average user, and so may not meet the information requirements of a specific person.

Still further, these displays are generally provided only at specific locations in the environment or "ecosystem" and therefore it is often not possible to obtain information when at other locations remote from the particular location where the display is located.

Some systems are known in which data or the like may be pushed from a transmitter to a mobile phone when the transmitter detects that the phone is nearby. However, like electronic displays, etc., such systems transmit or allow the user access to generic information aimed at the average user, and so may not meet the information requirements of a specific person.

The Applicants believe there exists, therefore, scope for improvement in methods and systems for the provision of information to or for a mobile device.

According to a first broad aspect of the present invention, there is provided a method of selecting information for provision to a mobile device, the method comprising:
attempting to authenticate a mobile device at an authentication point; and
in response to the authentication attempt, selecting information for provision to the mobile device.

According to a second broad aspect of the present invention, there is provided a system for providing information to a mobile device, comprising:
an authentication point, the authentication point comprising means for interacting with a mobile device;
authentication means for attempting to authenticate a mobile device;
selection means for selecting information for provision to a mobile device in response to an attempt to authenticate the mobile device; and
means for providing the selected information to the mobile device.

The present invention provides a method of, and a system for, selecting information for provision to a mobile device.

This is advantageous because selected, e.g. customised or otherwise targeted information can be made available for provision to or can be provided to a mobile device in response to an authentication or authentication attempt of the device. Namely a user who should be allowed access to the system can be authenticated via their mobile device, or at least can attempt to become authenticated, and in response to this authentication attempt, selected information, for example information specific to the user, the user's present environment or the like, can be sent to the user's mobile device. Therefore the user is provided with useful information in a timely manner and preferably is not provided with generic or at least surplus information that they do not require or to which they are unlikely to wish to refer.

The term "selected information" is intended to include all forms of information selected based on any criteria, for example from one or more available sets and/or sources of information. Selection may be specific to a user for example and based on information about the user, and/or selection may be from a generic set or sets of information and may for example include selecting all available information or may include selecting a subset of available information. Selection may be based on determined information about the user, for example, or may be based on the fact that no information or only limited information about the user can be determined, etc. The selected information could, for example, be the same information selected for transmission to any other mobile device successfully authenticated by the system, e.g. a standard set of information could be selected for transmission to all authenticated mobile devices for a particularly period or fulfilling certain criteria, etc.

The information may comprise any data, program, multimedia or other content, data, images, audio, etc., and this term is to be construed broadly. For example the information may comprise details of available products, services, etc., movies or audio files, programs or applications (or means for activating or otherwise enabling or updating existing programs), etc.

The mobile device may be any suitable and desired mobile device such as, for example, a mobile phone, a personal digital assistant (PDA), a BlackBerry handset or device, a laptop, or any other similar or appropriate device. In a preferred embodiment it is a mobile communication device, preferably a mobile phone.

The authentication of the mobile device can comprise any suitable and desired process in which some form of authorisation of the mobile device is attempted or occurs. Authentication is a recognised term of the art and unless otherwise specified herein has its usual meaning. For example authentication of, or authenticating, a device may include any one or more of the following steps or processes such as identifying a device, some other form of recognising a device, validating a device or other forms of accepting a device, or the like.

In a preferred embodiment, the authentication process comprises a payment transaction, such as the mobile device being authorised to access a system (e.g. a metro system) in response to payment for access to the system via the mobile device. This may for example be a direct payment from a "purse" of the mobile device, or the mobile device may contain pre-paid "tickets", or the like.

In other embodiments, the authentication may not require payment or ticket entry to a system, but may involve some other form of authorisation. For example the mobile device may be pre-registered with a system and the authentication may comprise determining the pre-registered status of the mobile device. Thus, in another preferred embodiment, the authentication process comprises determining the registration status of the mobile device with the system.

The authentication process could be triggered automatically, e.g., when the mobile device comes within range of an authentication point, or it could be user activated, or both. In a preferred embodiment, it can only take place if the mobile device is within a particular, preferably predetermined range of a suitable authentication point.

The authentication point can be any suitable means or device, etc. For example, the authentication point could be a dedicated authentication means or a detector or other means that detects the presence of the mobile device, or it could be a device or the like that has at least one primary function other than mobile device authentication.

In a preferred embodiment, the authentication point is an entry device, such as for example a turnstile or other barrier to entry for restricting entry to an environment or ecosystem. This could be, for example, a metro station.

In this case, when a mobile device such as a mobile phone approaches the turnstile, etc., the turnstile could and preferably does attempt to authenticate the phone and if successful then allows access to the ecosystem (e.g., metro station) that the turnstile protects.

The interaction, and particularly the authentication, between the mobile device and the authentication point can be carried out using any suitable technology and/or protocol. Preferably a short range wireless communications protocol, such as Bluetooth or WiFi, etc., is used. In a particularly preferred embodiment, the authentication comprises a near field communication (NFC) transaction.

In a preferred embodiment, a security module is provided at the mobile device and a further security module is provided at the authentication point, and these security modules interact securely to attempt to authenticate the mobile device.

For example, in preferred embodiments the security modules have means for communicating such that the communications are secure. The communications may be solely to authenticate the mobile device, or other transactions, transfers, etc., between these devices may also be secure.

In preferred embodiments, information such as one or more data packets or other form of communications data or the like, are transmitted between the authentication point and the mobile device. In particularly preferred embodiments, the transmissions are secured by being at least partially encrypted, using any suitable encryption method known in the art. For example a packet of data transmitted from the mobile device to the authentication point is preferably at least partially encrypted such that if intercepted or otherwise accessed by any other means, the encrypted part of the data packet cannot be read/understood and/or decrypted by the intercepting or accessing means.

In particularly preferred embodiments, one or more keys is required to decrypt any encrypted or otherwise encoded data or information transmitted between a mobile device and an authentication point. Preferably the keys are stored in, or in means accessible by, the authentication point. For example the authentication point may have one or more keys stored in a memory, which can be updated for example on a regular basis and/or as desired, for improved security. The keys may instead or additionally be stored in a remote memory accessible to the authentication point for example on a remote server or the like.

In particularly preferred embodiments the mobile device does not have any keys stored thereon, and preferably does not have access to such keys. The mobile device therefore cannot decrypt any portion of the data or information, etc., that is encrypted. This is particularly advantageous because such systems are secure and prevent unauthorised accessing/modifying/duplicating, etc., of the information stored on the mobile device. Therefore a user of the mobile device cannot, for example, access the secure (encrypted) data and reprogram or otherwise alter the data to, for example in the metro arrangement, provide the user with more tickets than the user has paid for. Furthermore this prevents the user from distributing the tickets assigned to a particular mobile device to other mobile devices, or otherwise using the tickets or other data in an unauthorised manner. Still further, if the mobile device does not store the key and preferably the authentication point never transmits the key since it should not be sent to the mobile device, then the key cannot be intercepted by unauthorised parties. If the key identifier or index is intercepted, this is meaningless unless the interceptor also has access to the key index database, therefore security is further improved.

In preferred embodiments the data stored on the mobile device contains means for identifying the key(s) required for decrypting the encrypted data portions, but not the key itself. For example, the means for identifying the key(s) may comprise a key identifier or index. The authentication point can thus read the key index and compare this with a database of indexed keys to select the appropriate key for decrypting the encrypted portion of the data. Preferably therefore the key index is stored in an unencrypted portion of the data stored on the mobile device and that is to be transmitted to the authentication point.

The data stored on mobile device may include any of the following (preferably in the encrypted portion of the data): a mobile device identifier such as a unique identifier code, information relating to the ecosystem(s) to which the device may wish to enter, for example in the metro station embodiment, ticket information, number of remaining tickets, etc., user preferences, account information and available funds, etc., or any other information as desired.

Communications between the mobile device and the authentication point as discussed above can be further secured by, for example, duplicating portions of the encrypted data in the unencrypted data and comparing them, preferably at the authentication point. For example, a unique device or phone identifier could be stored in the encrypted data as well as the unencrypted data. Should an unauthorised party, or the user of the mobile device themselves, modify the unencrypted identifier, then it will be evident to the authentication point upon such a comparison that the unencrypted data has been tampered with and appropriate action can be taken.

As discussed above in the present invention information is selected for provision to the mobile device in response to the authentication of the mobile device. The step of selecting information could be performed in response to any authentication attempt, irrespective of the outcome of the authentication attempt, but in a preferred embodiment, it is, and preferably only is, performed in response to a successful authentication attempt.

The information for provision to the mobile device can comprise any suitable information and may be partially or wholly related to the present ecosystem to and/or may be unrelated. For example, in preferred embodiments, the selected information relates to the status of the ecosystem, problems within the ecosystem, services available in the ecosystem, products and services available in the neighbourhood of the ecosystem, etc.

The selected information can take any suitable form, but in a preferred embodiment comprises content, such as web-content, multi-media content, etc., for provision to the mobile device. It should be noted here that the selected information is intended to be different to and in addition to any data that may be provided to the mobile device as part of the authentication process, and thus should be distinguished from any information that is provided as part of the authentication process itself.

The selection of the information for providing to the mobile device can be based on any suitable and desired criteria. It is preferably based on criteria determined about the particular mobile device from the authentication process (since, as discussed above, this provides the ability to better customise the information for the user).

For example, in the case of a payment transaction, the information is preferably selected based on the type of payment transaction (e.g. the electronic ticket) used to gain entry to the ecosystem. So if a mobile device pays for entry to zones 1 and 2 of the metro, for example, service information regarding zones 1 and 2 could be selected for provision to the mobile device.

In a preferred embodiment, information about or relating to the mobile device that is sent to the authentication point during the authentication process is used when selecting the information for provision to mobile device. This is advantageous as it allows the system to customise or otherwise further select information for provision to the mobile device.

In a preferred embodiment the selection is based on and/or uses information about, or relating to one or more of: the present location of the mobile device; previous locations of the mobile device; previous transactions of, or relating to, the mobile device; preferences stored on, or in relation to, the mobile device; the specification of the mobile device; the capabilities and/or functions and/or applications of, or available to, the mobile device; etc.

It is preferred to also or instead base the selection on and/or use other information such as, for example, the location of the authentication point, services available within an ecosystem which the authentication point serves or is located in, etc.

Once the information has been selected for provision to the mobile device, it should then be provided to the mobile device. This is preferably achieved by transmitting the information to the mobile device, preferably by means of a suitable short-range wireless communications protocol, such as Bluetooth or WiFi.

Thus, in a preferred embodiment, the present invention further comprises a step of transmitting the selected information to the mobile device.

The transmission technology to use could, e.g., be based on the capabilities of the mobile device (e.g. if the device only has Bluetooth wireless transmissions enabled, the transmission is preferably performed using Bluetooth protocols).

Similarly for devices having two or more different transmission technologies, the choice of transmission type could be based, for example on the content or information to be transmitted. For example, Bluetooth transmissions could be used for transmitting relatively simple information, Wi-Fi for transmitting larger content such as movie trailers, advertisements, etc., and/or DVB-H for television broadcasts or video streams, etc.

Such transmission could be carried out by the authentication point, e.g. in the metro example the turnstile, and/or by one or more other transmission devices either in the vicinity of, or remote from, the authentication point. For example within the ecosystem, there may be access points or totems or other information or media distributors placed at suitable and/or convenient locations (such as on platforms, on metro trains, etc., in a metro system), via which the information can be transmitted to the mobile device.

The information to be provided to the mobile device can be stored by the system as desired. It could, for example, be stored locally, for example in the authentication point, e.g. turnstile, itself, and/or some or all of the information could be stored in a remote memory that is accessible to the authentication point, e.g. in a remote storage device such as a server or the like.

The latter arrangement may be advantageous because the information can be stored remotely in means capable of storing and transferring large amounts of information and, for example in systems having a large number of authentication points, each or at least some of the authentication points can access the same remote storage means, thereby reducing or eliminating the need to duplicate information at each authentication point. This could then mean that little or no storage is required at the authentication point(s), thus reducing system costs and complexity.

Additionally or alternatively, some or all of the information could be stored in, or accessible by, one or more remote transmission devices such as "totems", other access points or other media distributors (as discussed above).

Thus, for example, in some embodiments the authentication point, e.g. turnstile, may not have transmission capabilities (particularly for simplified arrangements having slave authentication points coupled to at least one master as will be discussed below) and the information will instead be provided to the mobile device from a transmission device at a suitable location, such as elsewhere in the ecosystem, or in some embodiments some information could be transmitted from the authentication point whilst some information is provided by one or more transmission devices, that may be at one or more locations different from the authentication point and/or the other transmission devices. In embodiments like these, the information provided from the different sources may be completely different, or may at least partially overlap, or may be updated versions of the information from the other sources, etc.

In embodiments in which the selected information may be transmitted to the mobile device from a transmission device that is different to (and, e.g., remote from) the authentication point, it is particularly preferred that no further authentication of the mobile device is required at or for the transmission or further transmission device.

Thus, after the mobile device has been authenticated, in preferred embodiments no further authentication is required at the access point or totem, etc., via which it is to receive the information even if the access point or totem, etc., is separate and perhaps remote from the authentication point. This is preferably achieved by the authentication point (e.g. turnstile) informing the information transmission point (e.g. access point or totem) directly and/or indirectly (e.g. via one or more other devices or the like to which the, e.g., turnstile and the totem or access point are coupled, including, e.g., the mobile device itself) that the mobile device has been authenticated. It is preferred that thereafter, e.g. for a certain period, and/or until it is determined that the mobile device has left the ecosystem, etc., the mobile device is considered to be pre-authorised for access to the information, such that no further authentication is required.

In one preferred embodiment, the selected information is transmitted to the mobile device automatically by the system, without the need for any further user request to receive the information (i.e. it is "pushed" to the device). Such automatic transmission could take place immediately the authentication is completed (in response to authentication), and/or when or whenever, the mobile device is detected as being within range of a suitable and/or the relevant transmission point. The transmission could also take place at selected, e.g., regular times, or time intervals, periodically, or in any other suitable manner.

It is also preferred that the transmission of the information can be user-activated. This could be instead of or as well as the possibility of automatic transmission of the information to the user. In some embodiments, there would be no automatic transmission of the information to the user, rather the user would first have to request or fetch the information via the mobile device (or in some other way). In this case, the user could, e.g., approach a transmission point and then signal via the mobile device and/or operation of means of the transmission point, etc., their desire to download the information from the transmission point.

In preferred embodiments, the information comprises instructions to activate an application that resides on a mobile device. Information can therefore be viewed via the mobile device, and/or one or more functions or applications may be activated on the mobile device to, for example, provide information and/or to offer options for further information, etc., to the user of the mobile device.

In a preferred embodiment, the information activates an application on a mobile device. This may be so that the mobile device is able to receive, access, display or otherwise use further information from the, and/or any one or more other, transmission device(s) of the system. Preferably the information activates an or the application such that no further authentication is required for the mobile device to receive and/or access further information from, for example, the other transmission devices of the system. In preferred arrangements, the information sent to a mobile device automatically triggers or otherwise activates an existing, preferably specific or customised, application on the mobile device. The information could comprise a complete set of information (e.g. the information provided to a mobile device may contain all the information necessary for enabling a user to view the desired information, content etc.). The information could comprise a partial set of information and, for example, instructions to an application on the mobile device to modify and/or otherwise augment any information of the application on the mobile device.

For example, in a metro ecosystem as discussed above, the mobile device may contain an application for the metro system which has a metro network map. The information sent to the mobile device may automatically select and activate the appropriate, i.e. metro system, application on the mobile device and, for example, may overlay the existing metro network map of the mobile device application with the information received from the turnstile and/or other transmission device. This enables, for example, real-time information such as delays on the network, line closures, preferred diverted routes, estimated time to arrive at one or more stations, newly opened stations, estimated arrival time of next or other trains, etc., to be displayed on the network map of the application.

Although in these embodiments the metro system application is automatically activated on receipt of the transmitted information, it is of course not essential for the application to be automatically activated and instead, for example, the information sent to the mobile device could be stored in the mobile device such that the user of the mobile device can activate the application themselves, as and when desired, to display or otherwise use the received information.

The above embodiments typically relate to successful authentication of the mobile device. However some or all of the above information could be selected for transmission to the mobile device in the event of an unsuccessful authentication attempt. For example, it may be the first occasion for which the authentication has failed and it may still be desirable to allow the user access to the content even though they may not be authenticated, for example to encourage the user to ensure that they can be successfully authenticated during future transactions or interactions.

In some embodiments it may be desirable to select different information for provision to a mobile device if the authentication fails. For example the information could inform the user how to rectify the reason for failed authentication and/or may inform the user of more appropriate ways of being authenticated, such as by buying a more appropriate ticket for authentication (e.g. buying a season ticket rather than paying each entry). Other information that could be sent to a mobile device that has failed authentication may be advertisements or tasters or the like illustrating the content that the user could receive if they enable their device for authentication.

It is preferably possible also to provide information to a mobile device not just in response to an authentication attempt. For example, in the metro ecosystem, even if the user gains entry by other means, for example paying with cash or using a paper ticket, it may still be advantageous to send information or content to the mobile device of the user (for example advertisements telling them how to enable mobile device authentication, or tasters of the type of content available to them if they were to have mobile device authentication). In such systems the user could initiate download of the information or content to their mobile device themselves, e.g. by activating a download application.

Whilst in some embodiments only one authentication point is required, it may be advantageous in many embodiments to have more than one authentication point. For example, in a metro station, there may be plural turnstiles.

Where the system includes plural authentication points, then one, some or all of the authentication points may have one, some or all of the features discussed above with regard to the authentication point.

In a particularly preferred embodiment where plural authentication points are provided, then not all of the authentication points necessarily have all of the features of a complete, standalone authentication point. This is particularly advantageous for systems and methods for use with, for example, large environments or ecosystems where it may be desirable to have one or more authentication points at different locations, since it can avoid the need for each authentication point to have a "full" set of features.

Thus, in a preferred embodiment, where there are plural authentication points, there are one or more authentication points that are able to carry out a proportion of, most, or preferably all the functions required of an authentication point, and one or more other authentication points that have a more limited capability and functionality, but that are able to communicate with the complete, fully or mostly fully functional authentication points.

In such an arrangement, the complete, fully or mostly fully functional authentication points can be considered as "master" authentication points, with the other authentication points then being "slave authentication points".

Such an arrangement is advantageous because not only can the slave devices be less complex and therefore less costly, but it also enables new slave devices to be added to the system more easily and at lower costs than adding further master devices.

Each slave authentication point is preferably capable of communicating, either directly or indirectly, with at least one master authentication point. In this manner a single (or a few) master device(s) can control the main functions required of an authentication point for the ecosystem, whereas the one or more slave devices need not have any, or may have only some, of the required functions.

Preferably therefore each authentication point has communication means for communicating with at least one other of the plurality of authentication points.

The communications between the authentication points can be by any suitable medium and can, for example be wired (e.g. by ethernet cable, etc.), or can be wireless. In preferred embodiments, the communications comprise short-range, wireless communications. In particularly preferred embodiments the communications connections are Zigbee wireless connections.

While it would be possible in these arrangements for each slave authentication point to be able to communicate directly with a master authentication point, this is not necessary, and, indeed, in a preferred embodiment, each slave authentication point need only be capable of and is preferably only capable of communication with one, or two, or only a few, other authentication point or points (which can either be a master authentication point or points) or another slave authentication point or points).

In a particularly preferred embodiment, the (slave) authentication points communicate with their respective master authentication point by "daisy-chaining" the communication through one or more other slave devices (as appropriate). This has the advantage that the slave devices can be spaced away from the master device by a greater distance without the need for a different or more powerful/further reaching transmission arrangement. In some embodiments it is further advantageous if one or more of the slave devices can communicate with more than one other device as any failure in communication with one device does not prevent communication with the master device(s) as the alternative slave device(s) can instead be used to daisy-chain to the master device(s).

Although it is not necessary for the slave devices in these arrangement to have any or all of the required functions of a master device, in preferred embodiments the slave authentication devices at least have means for attempting to authenticate a mobile device. This is advantageous because should, for example, communication be lost between the slave authentication device (when attempting to authenticate a mobile device) and any of the other authentication points with which it is capable of communication, then authentication at least can still be completed since it is executed locally, not over the lost communications connection.

In this embodiment, any information, content etc., that it is desired to send to the mobile device in response to the authentication can still be sent from another, e.g. master, device as and when communications are re-established and the slave device informs the master device that the mobile device has been authenticated. Therefore it is not necessary for the slave authentication point to also have transmission means for this purpose.

Therefore in preferred embodiments of these arrangements of the present invention, each of the plurality of authentication points is capable of at least attempting to authenticate a mobile device.

The authentication points of any of the embodiments of the invention, and particularly the master authentication point(s), may be self-contained devices inasmuch as they have all the functionality, data, etc., required to carry out their required functions. However self-contained authentication points may be complex and costly and may each present a lone point of failure should any error occur at the authentication point.

Preferably therefore at least one authentication point (or at least one of the master authentication points) is capable of communicating with a, preferably remote, network.

Some or all of the functions (authentication, other secure data transactions, provision and/or transmission of information, etc.), may therefore partially, additionally or alternatively be provided by, or distributed at least partially over, the remote network.

In some preferred embodiments, at least some of the functions occur at the relevant authentication point and others at the remote network, and/or at least one of the authentication point and the remote network is capable of carrying out duplicate functions in the event that the other fails. These embodiments are advantageous because this enables the authentication point and the remote network to share the load on the system and can provide redundancy and back-up in the event that the network/authentication points experience any failure.

The network is preferably also capable of instructing, or carrying instructions to, other (remote) transmission devices, such as access points, totems etc., as discussed above, to select, transmit or offer for transmission the information to the mobile device.

The authentication point(s) may be connected to the network in any suitable manner, for example via an ethernet and/or via a wireless connection or the like, such as Zigbee for example. The authentication point may have more than one means for communication with the network and may connect directly or indirectly to the network, via a single or via multiple communications protocols.

The network may comprise any suitable components etc., having any one or more suitable functions or capabilities. Preferably the network comprises an authentication server. In the metro example, there may be an authentication server for each station ("station authentication server") and there may also be an application service provider to which many stations (and particularly many station authentication servers) have access.

In preferred examples of such an arrangement, as discussed below in more detail, the mobile device is authenticated by one of the authentication points, and the station authentication server controls certain other authentication procedures (for example, stores "blacklists" of devices that should not be allowed access to the system and that are periodically sent to the authentication points), and an application service provider stores, selects and controls transmission of, or offers for transmission, the selected information to the mobile device from the appropriate transmission device(s). This advantageously provides a distributed network capable of efficiently and reliably authenticating a mobile device and providing selected information/multimedia content, etc., to the mobile device, thereby providing an enhanced authentication experience to the mobile device user. For example in each of the above embodiments and particularly with reference to systems such as the metro embodiment, the user is provided with an enhanced payment experience receiving more than just access to a system when payment for entry is made.

The above systems and methods incorporate, in at least some embodiments, certain hardware or combinations of hardware (and/or software) for carrying out the methods of, or enabling the systems for, providing information. Some of this hardware and/or some of the systems and combinations of hardware and software are thought to be new and advantageous in their own right.

For example, in order for a mobile device such as a mobile phone to carry out the methods of the present invention, the mobile phone requires means for interacting with the authentication point(s) at least. These may be provided in the mobile phone during manufacture. However some phones may not be provided with such capabilities on manufacture and therefore it is desirable to provide an add-on and/or cover or other enhancement or component for, or for use with, a mobile phone.

According to a further broad aspect of the present invention, there is provided a module for a mobile device, the module comprising:
wireless communications means for wireless communication with a remote device;
at least one applications module, for activating one or more applications;
means for receiving information for activating one of more of the applications of, or for use with, the applications module;
authentication means for transmitting and/or receiving authentication communications to and/or from a remote device or application such that authentication of the mobile device at an authentication point can be attempted.

The above module is advantageous because any mobile device can be provided with the capability to carry out the embodiments of the present invention discussed above, even if the mobile device would not in itself be capable of doing so.

Preferably the module comprises a memory device and preferably the memory device has input and output capabilities, such as an SD I/O card device.

Preferably the module comprises a component for connection with, attachment to, or forming an integral part of, a mobile communications device.

Preferably the wireless communications means for wireless communication with a remote device comprises a wireless communications chipset, such as a near field communications (NFC) chipset.

Preferably the module comprises means for managing security of communications with a remote device.

All the means of the embodiments of the mobile device module maybe provided by the means, etc., discussed with relation to the other aspects of the invention and it is within the scope of the present invention for the embodiments to be combined in any suitable manner.

The methods in accordance with the present invention may be implemented at least partially using software, e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on data processing means. The invention also extends to a computer software carrier comprising such software which when used to operate a personal communications system or hands free device comprising data processing means causes in conjunction with said data processing means said system or device to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus from a further broad aspect the present invention provides computer software and such software installed on a computer software carrier for carrying out at least one of the steps of the methods set out hereinabove.

A number of preferred embodiments of the present invention will now be described by way of example only and with reference to the accompanying drawings, in which:
Figure 1 shows schematically an exemplary ecosystem to which a mobile device may request access in accordance with certain preferred embodiments of the present invention;
Figure 2 shows schematically an exemplary turnstile authentication point of an ecosystem such as shown in figure 1, in accordance with certain preferred embodiments of the present invention;
Figure 3 shows schematically a plurality of authentication point turnstiles, such as the turnstile of figure 2 in an ecosystem, such as the ecosystem of figure 1, in accordance with certain preferred embodiments of the present invention;
Figure 4 shows schematically an exemplary module or cover for a mobile phone in accordance with certain preferred embodiments of the present invention; and
Figures 5(a) to 5(c) show schematically an exemplary security system for communications between a turnstile authentication point, such as the turnstiles of figures 1, 2 or 3, and a mobile phone, in accordance with certain preferred embodiments of the present invention.

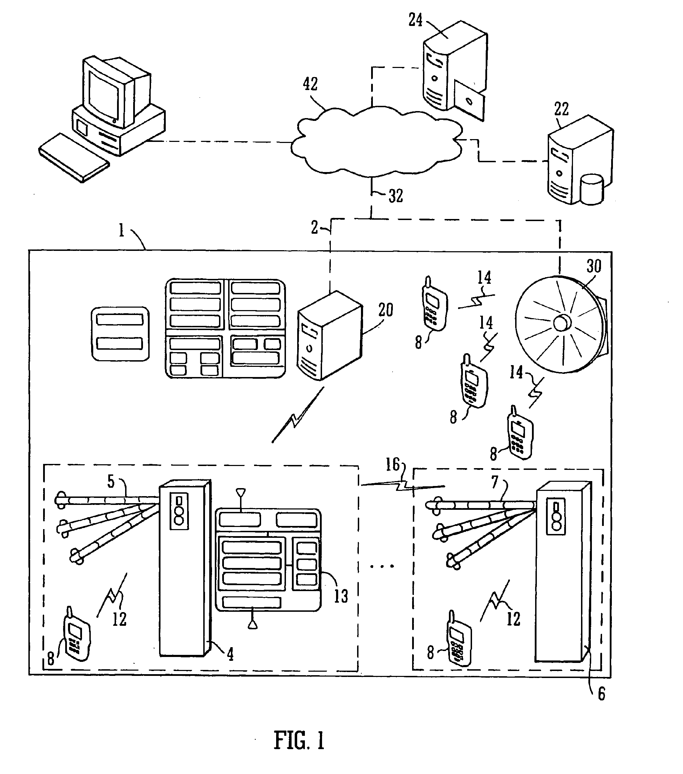

Figure 1 shows schematically an environment or ecosystem 1 to which entry is restricted and which is controlled by control system or network 2. The illustrated ecosystem in this embodiment is a metro or underground station.

Entry to the metro station ecosystem is restricted by one or more turnstiles 4,6. Unless and until a user is permitted to enter the ecosystem, the turnstile barriers 5,7 prevent entry. A user wishing to enter the metro station can do so on payment of a fee (e.g. purchasing a valid ticket). In the embodiment of the invention shown in Figure 1, this can be achieved by a transaction 12, 14, preferably an NFC transaction 12, between a mobile device of the user (in this embodiment, the mobile device is a mobile phone 8) and one of the turnstiles 4,6.

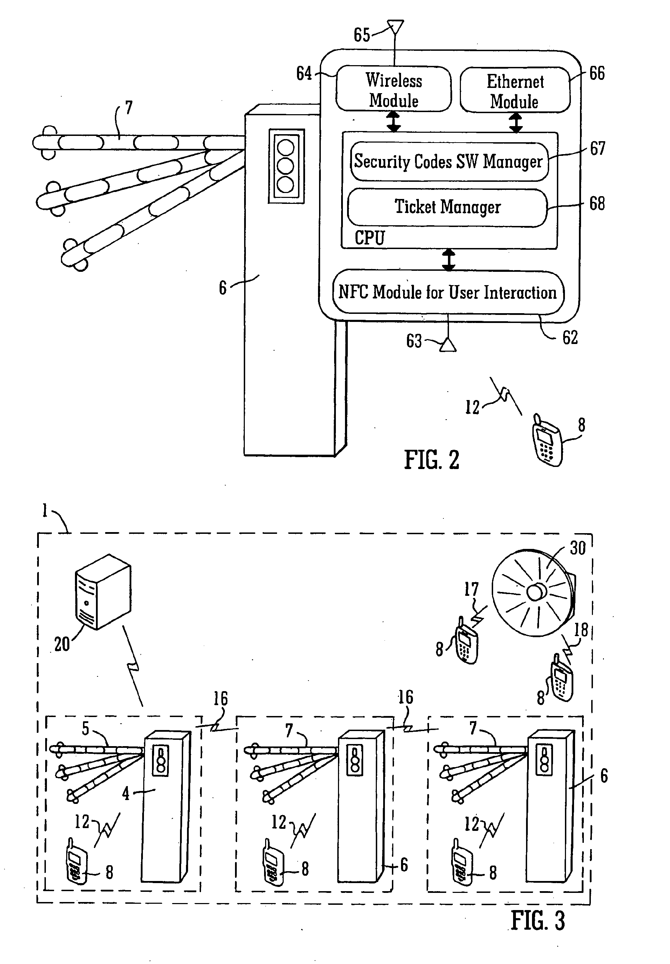

The user may approach any of a number of turnstiles at the metro station entrance. In the embodiment shown in Figure 1, only one of the turnstiles (master turnstile 4) has the functions necessary to carry out all the requirements of a turnstile in the system. Slave turnstile 6 (of which there may be many at the entrance to the metro station as shown in figure 3 for example) is capable of carrying out authentication of the mobile device 8, but not of performing some of the other functions of the master turnstile 4 as will be discussed below.

In order to enter the metro station the user brings the mobile phone 8 within communications range of the nearest turnstile 1, which is the master turnstile. Operation of the system when a user of mobile device 8 brings their mobile phone within range of slave turnstile 6 is discussed below.

An authentication transaction (e.g. an NFC transaction 12) is, preferably automatically, initiated between the turnstile 4 and the mobile phone 8 when the phone is within NFC communications range. If the mobile phone 8 is determined to be allowed access to the metro station, e.g. if the NFC transaction 12 comprises payment of the entrance fee or shows that the mobile phone contains a valid ticket (an electronic or e-ticket for example), the user is permitted entry to the metro station and the barrier 5 opens to allow the user to pass.

As well as allowing the user of the mobile device 8 to enter the metro station, the control system 2 selects information that is to be provided or made available to the mobile device 8 and thus will be accessible to the user of the mobile device 8.

The selection of information can occur at one device in the system, or can be distributed across the system. In this embodiment, some of the information to be sent to the mobile device 8 is selected by, and retrieved from, a storage device of the master turnstile 4. Other information to be sent to the mobile device can be retrieved from other means, for example some information may be provided by a remote application service provider server 22 to which the master turnstile 4 may have direct and/or indirect access, preferably via a more local, station authentication server 20. Indeed the station authentication server 20 may alternatively or additionally select and/or store some or all of the information for provision to the mobile device 8.

As discussed, the station authentication server 20 may carry out some or all of the operations of the embodiments of the present invention. For example, the station authentication server 20 may collect data from all of the ecosystem turnstiles, may perform batch authentication requests of the data, may export data to the application service provider server 22, may import new data, settings and multimedia content, etc., from the application service provider server 22, or any other suitable source. The station authentication server 20 may be a dedicated, separate device such as a stand alone server as shown in figures 1 and 3, or could be integrated with an authentication point, e.g. within a turnstile such as master turnstile 4 of the ecosystem shown in figures 1 and 3.

Any or all of these means may communicate in any suitable manner, for example over a network which may be a local area network, a wide area network and/or the Internet, or any combination of the above or other suitable medium. Several different types of communication can be used in a network, for example the turnstile 4,6 may communicate with the station authentication server 20 (assuming it is a separate device) wirelessly, e.g. using the Zigbee protocol, whereas the station authentication server 20 may communicate with the application service provider 22 via a wired, e.g. Ethernet, connection, and/or over the Internet, etc.

The information selected for provision to the mobile device 8 can be any suitable information and preferably comprises multimedia content such as for example information, preferably real-time information, for display on an application of the mobile device, including images, video, or other content that might be of interest to the user. In preferred embodiments of the invention, the information to be sent to the user is selected based on information determined about the user/the user's mobile device 8, about the turnstile and the ecosystem that it protects (i.e. the metro in the Figure 1 embodiment), or on a combination of these and/or other factors.

For example, the information for provision to the mobile device 8 may be selected based on the type of ticket of the mobile device 8 that enables the user to enter the metro station. For example if the mobile phone 8 enters the metro station using a "zone 1" ticket, then the information selected for provision to the mobile device 8 might include information relating to timetables for that zone, or delays or other problems or other relevant information, etc., within zone 1 of the metro system. The selected information can of course be any other information that is determined as potentially of interest to the user of the mobile phone 8, such as other service information, advertisements, TV or other video broadcasts (e.g. movie trailers, etc.), information regarding more appropriate tickets that may be available to the user, etc.

The information may be based on the type of ticket used to gain entry to the metro station but also or alternatively could be based on other factors related to the mobile device. These factors could be, for example, previous transactions of the mobile device, user preferences stored on the mobile device or in the system (which are identified as relating to the mobile device in response to the authentication), predicted behaviour and/or preferences of the user, etc.

One or more of the components of the system selects information, such as multimedia content or application data etc., to be provided to the mobile device. In the embodiment shown in Figure 1, the information is automatically provided to the mobile device, preferably in response to the authentication of the device, but of course the information need not be automatically provided and could instead or additionally be made available for provision at the user's request, or may be automatically or otherwise provided to the mobile device 8 only when the mobile device 8 is within range of means for providing the information, etc.

The information can be sent to the mobile device by the master turnstile 4, and/or by any other suitable component of the system. In the embodiment of Figure 1, the information is transmitted automatically to the mobile device 8 by remote access point or totem 30. This totem 30 can be located anywhere in the metro station and, for example, one totem 30 may be located on each platform, and/or on the metro trains, etc.

In the embodiment of Figure 1, totem 30 is located on the platform to which it is predicted that the user will go based on the type of ticket used to gain entry to the metro system. For example, zone 1 trains may all depart from a particular platform and so in this embodiment the selected information is transmitted from a totem 30 at the particular platform. The transmission may occur periodically and/or when the mobile phone 8 is detected and/or recognised to be within range of the totem 30.

The control system 2 is informed by the master turnstile 4 that the user has gained access to the metro station. The control system 2 at least partially controls transmission of the information to the mobile device, via the totem 30 in this embodiment, and it is therefore unnecessary for the mobile device 8 to be authenticated again by the totem 30, since the control system already knows that the mobile device 8 is to be permitted access to the information.

In some embodiments, it is also possible for the control system of a metro station to inform an application service provider server 22 and/or public authentication server 24, etc., that the user has been permitted access to one station, and it can inform other stations about the user's authentication to enable the other stations also to transmit information to the user's mobile phone 8 as appropriate.

Transmission of the information to the mobile phone 8 can be carried out in any suitable manner, preferably wirelessly. As shown in Figures 1, 3 and 5(a) to (c) which are discussed below, the transmission can be carried out using any suitable protocol 12, 14 which is enabled on the mobile phone 8. If the mobile phone 8 can operate with multiple protocols 12,14, the most suitable protocol for the type and size of transmission could be selected, and/or the protocol or channel determined to be most suitable (e.g. available and carrying the least traffic) at that time could be used. For example Bluetooth could be used for smaller bandwidth transmissions such as user application updates, Wi-Fi for video or audio packets which generally require a larger bandwidth, DVB-H for very large bandwidth transmissions such as streaming media, e.g. "Metro TV", etc.

The information received by the mobile device 8 in this embodiment automatically causes an appropriate application to be selected and activated on the mobile device 8. The "metro application" is pre-stored on the mobile device and contains at least basic general information about the network (e.g. the application stores a network map). The information interacts with the metro application and modifies the application as appropriate. For example a real-time display may overlay the network map of the application showing the lines of the metro that currently have disruptions, or that are running clearly and on time, etc.

Other applications or modules that may be useful in the metro system example are any one or more of: a payment or "purse state" module, which has usage statistics relating to payments made or that can be made and alerts when money and/or tickets are about to expire; a "ticket recharging" module, which allows a user of the mobile phone to purchase more tickets using NFC and/or other technologies such as SMS (short messaging system) and/or UMTS (universal mobile telecommunications system) remote connection; a "ticket information" module, which contains information such as where the ticket was bought, what the ticket allows, the ticket price and validity period, etc.; a "station search" module, which allows specific stations to be searched for taking into account the different network delays, closures or the like; a "route tracer" module, which allows searches to draw over the network map the different lines and changes, etc., required to reach a destination and may for example include the estimated time of arrival at the destination, when the next train to the destination is due to arrive, etc.; a "promotional information" module, which allows for example new stations or features related to the network to be promoted; a "channels information" module, which allows the user to view headers or headlines, and/or lower level information (e.g. details, stories etc.) for selected channels such as weather, news, sport, or the like; an "advertisement" module, which may contain places reserved for brands, companies, etc., to advertise; an "access to indoor television" module, which allows TV broadcasts or recordings etc., to be received and viewed at the mobile phone by any appropriate protocol or technology such as DVB-H, Wi-Fi, UMTS etc.; and a "local interactivity" module, which has promotional elements that can be activated inside the application or transmitted to the application by any suitable technology or protocol such as Wi-Fi or Bluetooth, etc.

These modules can be separate applications or can be modules combined in one or more applications, or could be at least partially shared with other applications, e.g. it may be desirable for several applications to share a payment or purse application. In the metro embodiments, the various applications are preferably combined in a single "public transport" application that is activated automatically on the mobile phone when the user pays with the mobile phone to pass through a metro turnstile, although certain modules may be accessible to other applications if desired.

The information received by the mobile device 8 may also include other content that can be displayed on the mobile device 8, such as movie trailers or streaming TV that the user can watch during their journey, or advertisements, or other information, etc.

The above describes the process of providing information to a mobile device 8 that approaches a master turnstile 4. If in this embodiment a mobile device 8 approaches a slave turnstile 6 instead, authentication should still be performed by the slave turnstile 6, but the information relating to the authentication is then transmitted, for example by a wireless, preferably Zigbee, communication to a neighbouring turnstile. If the neighbouring turnstile is not the master turnstile 4, then the neighbouring turnstile also passes the information to its neighbouring turnstile and so on until the information reaches the master turnstile 4. Once the information regarding authentication reaches the master turnstile 4, the further process is carried out in the same manner as if the mobile device 8 approached and was authenticated by the master 4.

The above process describes successful authentication of a mobile device 8 by a system 2. If however it is determined that the authentication is unsuccessful, for example if the mobile phone 8 is not NFC enabled, or if there is insufficient credit or no suitable entry ticket on the mobile phone 8 then the turnstile 4,6 may refuse entry to the user. However, it may still be desirable to send them some or all of the information usually sent to an authenticated user, perhaps only on the first occasion that the authentication fails, and/or to send them different selected information, any of which can be achieved in the same manner as disclosed for an authenticated user (except that the information should be transmitted from the master or slave turnstile 4,6 as appropriate since the user may not have access to the totems 30 within the metro station).

Sending the same selected information to the mobile device 8, preferably only once (after a first failed authentication), informs the user of what they could obtain and what they will now miss out on if they fail to authenticate again. Sending selected information only to mobile devices 8 that fail to authenticate could inform the user how to enable authentication of their mobile device.

After an authentication attempt of a particular mobile device 8 the station authentication server 20 )and/or the application service provider server 22 and/or the public authentication server 24), is updated with the information either that the mobile device 8 was successfully authenticated (and that, for example, one ticket in the store of tickets for that mobile device should now be marked as "used"), or that authentication failed. In the latter case, the mobile phone 8 may be added to a "blacklist" so that for future failed authentications, no information is provided to the mobile device 8 or only information relating to how to purchase valid tickets is sent to the device 8, for example.

The blacklist is preferably periodically distributed to all the turnstiles 4,6 so that they can refuse entry to blacklisted mobile devices 8. In some embodiments, the updates may occur overnight when the network is least busy. This may enable blacklisted mobile devices 8 to gain entry or information from the network up until the time the turnstiles 4,6 receive the update, but it helps to avoid congestion of the communications network during busy periods, therefore providing a system less prone to network interruptions or failure.

In preferred embodiments, information such as the blacklists, or information relating to a particular mobile device's transactions and remaining tickets, etc., is sent to a control server controlling a plurality of stations, such as an application service provider 22 and/or public authentication server 24, etc. Such servers can store and manipulate blacklists, can store and monitor any other suitable data and can be a centralised point for data, statistics, etc., relating to users accessing the system, system performance and other appropriate information.

Figure 2 shows an embodiment of an authentication point 6 in accordance with the present invention. The authentication point comprises a slave turnstile 6, which is capable of implementing some, but not all, of the necessary processes for an ecosystem such as the metro of figures 1 and 3.

As previously discussed, a mobile device 8 can communicate with the turnstile 6 via any suitable communications means and protocols 12,14. In the embodiment of figure 2, the mobile device 8 is NFC enabled. The turnstile 6 comprises an NFC module 62 and associated NFC transmission means 63 such that NFC transactions between mobile devices 8 and the turnstile 6 can be successfully completed. Of course, the turnstile 6 may have one or more alternative or additional communications modules that enable other forms of communication with the mobile device 8, for example a Bluetooth module and transmitter, etc.

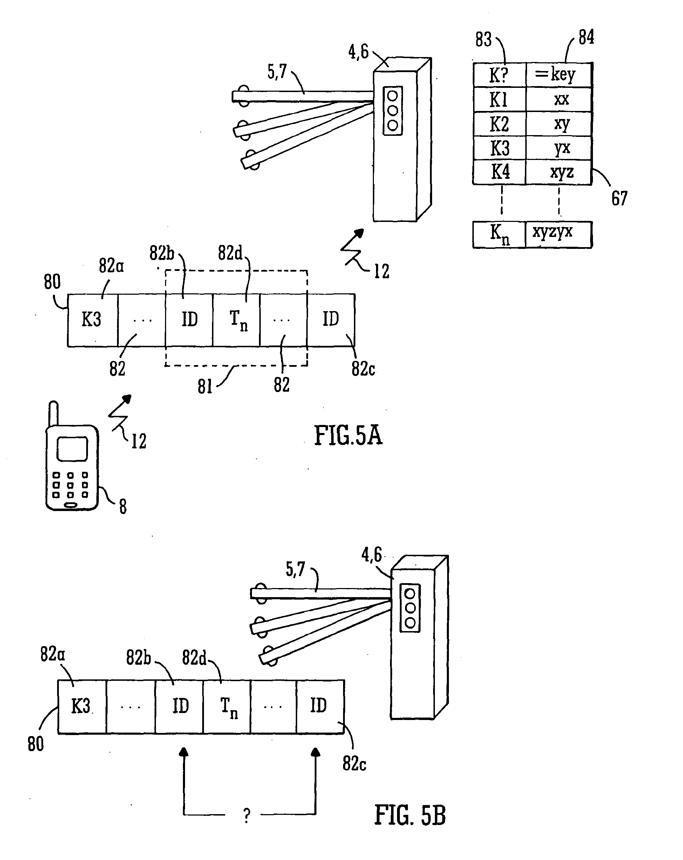

The NFC module 62 may, for example, control establishment of a connection and interchange of data with the mobile device 8 to determine whether the mobile device 8 should be permitted entry to the ecosystem. Details of a typical transaction are given in relation to figures 5(a) to (c) discussed below.

The turnstile 6 of this embodiment further comprises means 64,65 for communicating wirelessly with other authentication points 4,6 and/or devices, servers, etc., within the ecosystem. For example if used in the figure 3 embodiment, the turnstile 6 can communicate with at least one further turnstile 4,6, using, for example, Zigbee 16 communications such that information can be sent to/from the slave turnstile 6 to the master turnstile 4 and beyond, whether directly or via one or more other turnstiles 4,6.

Turnstile 6 in this embodiment further comprises an optional communications module 66 for wired, e.g. ethernet, communication with one or more other devices, servers, systems, etc. This of course could be replaced or supplemented with a suitable wireless communications module, such as a Wi-Fi or Zigbee module, etc. By enabling communication with other components of the system information regarding, e.g., the ticket data of the mobile device 8 or any other data, etc., can be sent directly to the station authentication server 20 or elsewhere if desired, and/or a back-up communications method is provided in the event of wireless failure, for example.

The slave turnstile 6 may comprise other suitable modules or the like, such as a security codes software manager module 67 for secure communications with mobile devices 8 (as discussed below in relation to figures 5(a) to (c)), a ticket manager module 68 for managing the tickets of the mobile device 8 for entry to the ecosystem, for example by validating an NFC payment for a ticket, redeeming the ticket, writing the result of a ticket redemption in the data transmitted to the mobile device 8, sending a signal to the turnstile barrier 7 opening means to open the barrier 7, etc.

It is advantageous to keep slave turnstiles 6 as simple as possible, since this reduces the cost per turnstile 6 and also reduces the complexity of introducing further turnstiles 4,6 should the system require expansion, particularly if the turnstiles 4,6 can communicate with one or more master turnstiles 4 indirectly via other turnstiles 4,6 in the system, i.e. by "daisy-chaining" the turnstiles 4,6. In preferred embodiments, slave turnstiles 6 comprise only the modules and means necessary to authenticate a mobile device 8 and to open the turnstile 6 to permit entry if allowed, and means to communicate with the system to inform the system of the authentication and any other necessary details (e.g. the mobile device 8 identifier(s), what type of ticket was used, etc.).

However the system preferably comprises at least one master turnstile 4 comprising additional modules, functions and features. In preferred embodiments the slave turnstiles 6 can communicate with the master turnstile(s) 4 directly and/or indirectly.

The master turnstile(s) 4 may, for example, comprise a transport information module, which contains information, media, etc., to be sent to a mobile device 8 on entry to the ecosystem or at a later stage (e.g. once the mobile device 8 is detected or expected to be on a particular platform). Other modules for carrying out any of the other functions of the ecosystem, etc., could also be provided at the master turnstile 4, as could the station authentication server 20 or any other servers or system components, as discussed above.

Figure 3 shows an embodiment according to the present invention having at least two slave turnstiles 6 "daisy-chained" with Zigbee communications 16 to a master turnstile 4. When a mobile device 8 communicates with any of the turnstiles 4,6 and, for example, an NFC transaction 12 occurs to pay for entry to the ecosystem 1, information is selected for transmission to the mobile device 8. The selected information is transmitted to the mobile device 8 by any suitable communication means, e.g. via the Bluetooth protocol 17, via the Wi-Fi protocol 18, etc. The transmission could occur from the turnstile 4,6 and/or from any other suitable device such as the master turnstile 4.

In the figure 3 embodiment, at least some of the selected information is transmitted to the mobile device 8 when it is determined that the device 8 is within range of a remote transmission device 30, which could for example be a totem or the like located, for example, on a station platform. Information about the transaction, information sent to the mobile 8, etc., is sent to the station authentication server 20 for further use as desired. For example the station authentication server 20 can manage blacklists, decide what content to send to a mobile device 8, control and monitor system statistics, etc.

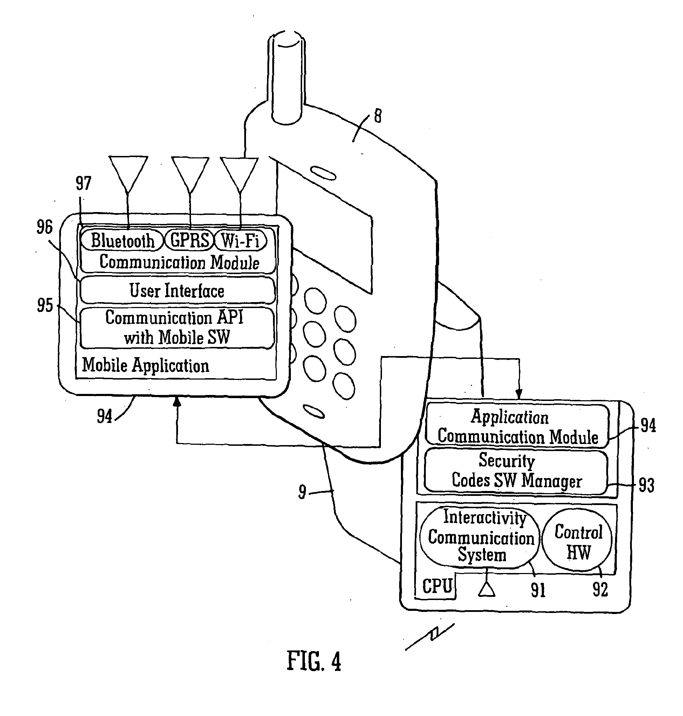

Figure 4 shows a mobile device 8. Modern mobile devices generally are provided with the latest software and hardware. However older devices may not have the required hardware or software for interaction with ecosystems such as the embodiments of the present invention discussed herein. Furthermore as new software and hardware are developed, even the mobile devices that are still relatively modern may not be provided with all the future hardware and software that is developed, whereas the ecosystems will evolve with such developments and incorporate the new software and hardware as appropriate.

Therefore, as shown in figure 4 and in accordance with preferred embodiments of the present invention, a mobile device module 9 is provided for integration or connection with one or more mobile devices 8. The module 9 preferably takes the form of a cover, such as a clip-on cover or the like, as are often used with mobile devices 8 for holding power units, data storage means, etc. The cover 9 preferably is configured and designed to replace any existing cover of the device.

The mobile device module or cover 9 preferably contains any means (hardware and/or software) necessary for enabling all necessary and desired communications between the mobile device 8 and an ecosystem 1. For example the cover 9 may contain the latest version of software that an ecosystem 1 operates, and/or the latest transmission means using the latest protocol, and means for enabling the mobile device 8 to use these. In particularly preferred embodiments the mobile device module 9 is updateable, so that the module can evolve as the ecosystem evolves, e.g., by automatically retrieving any software or application updates as required, for example from a suitable authentication point, etc.

In the embodiment of figure 4, the module or cover 9 comprises, on the central processing unit (CPU), an interactive communication system 91 and hardware control 92 for controlling the device 8, the required security codes software manager 93 (for communicating with the corresponding module of the turnstiles, etc.), and an application communication module 94. The application communication module 94 comprises the application required to interact with, for example, a particular ecosystem 1. In figure 4, the module 94 comprises the mobile communications application 95 which can run on the mobile device 8 and receive information for display, etc., and otherwise interact with the ecosystem 1. The user interface 96 enables the application 95 to operate with the existing systems, etc., of the mobile device 8. Furthermore there is provided a communication module 97, comprising the means for communicating with the ecosystem 1. In this embodiment, the module comprises Bluetooth, GPRS and Wi-Fi communications means, such as the software and hardware required to operate such communications.

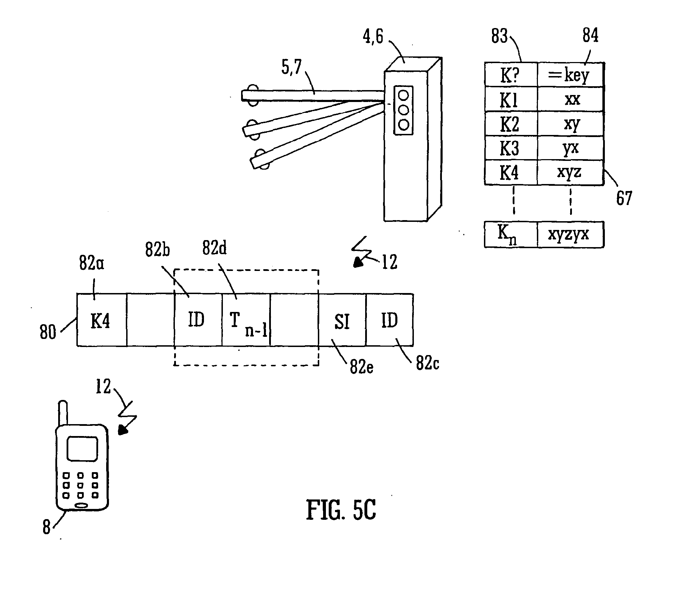

As discussed above, it is particularly preferred for any transactions or other communications between the mobile device 8 and the ecosystem 1 (e.g. with the turnstile 4,6) to be secure. Figure 5 schematically shows an exemplary secure interaction between these devices in accordance with preferred embodiments of the present invention.

Figure 5(a) shows a transmission, such as an NFC transaction 12, between a mobile device 8 and turnstile 4,6. Information, such as data packet 80 is sent from the mobile device 8 and contains data relevant to the transaction. For example data segments 82b and 82c both contain the unique identifier ID of the mobile device 8 (e.g. the device's International Mobile Equipment Identity (IMEI) number). Segments 82,82a,82c of the data packet 80 are unencrypted and thus can be read by the turnstile security module 67 whereas the encrypted portion 81 cannot be read unless the specific encryption key is known and can be applied to decrypt the encrypted portion 81.

The turnstile 4,6 could be provided with the specific encryption key used by sending the key as part of the data packet 80 to the turnstile 4,6. However the key must be sent unencrypted in order for the turnstile 4,6 to be able to use the information, and thus this process is relatively insecure and may be open to interception.

Therefore in preferred embodiments of the present invention only an index or other identifier of the specific encryption key is transmitted to the turnstile 4,6. For example data segment 82a contains key index K3. The turnstile 4,6 (or at least one master turnstile 4 with which the turnstile 4,6 can communicate) has a database with a list of key indexes 83, each of which has an associated encryption key 84. Therefore the turnstile is informed of the specific encryption key 84 to use to decrypt encrypted portion 81 of data 80 without the key ever being transmitted via transmission of the key index 83. Furthermore the mobile device 8 preferably does not know the encryption key 83 nor has access to the database, so it is not possible to decrypt the data and tamper with it from the mobile device 8 itself. Thus a secure system is provided.

When the turnstile 4,6 has read the decrypted data, the transactions discussed throughout the present application can be performed. In particular embodiments for example, a ticket can be redeemed for entry to the ecosystem 1. The number of available tickets Tₙ is read from the decrypted data segment 82d and the system deducts one ticket before further encrypting part 81 of the data packet 80 and transmitting the packet 80 back to the mobile device 8 for storage thereon, with a reduced ticket number Tₙ₋₁, as shown in figure 5(c). Data packet 80 can also include the selected information (SI) in one or more (unencrypted) segments 82e, in accordance with the embodiments of the present invention, or the selected information could alternatively or additionally be sent in a separate communication.

In addition to amending the number of available tickets Tₙ, the turnstile 4,6 may also transmit the data packet 80 with a new key index K4. This improves security further since regularly changing encryption keys reduces the likelihood of intercepted messages being decrypted. Furthermore, should a new and better algorithm or other key be developed, the system is capable of using the new key for further improved security. Since it is not necessary for the mobile device 8 to be able to decrypt the encrypted portions 81 of the data packet 80, it is also not necessary for the mobile device 8 to be able to recognise or even use the new key K4, just to store it.

For further improved security, particularly to prevent data, etc., being distributed from one mobile device 8 to another without authorisation, the unencrypted portion of the data packet 80 as well as the encrypted portion 81 may contain the unique mobile identifier ID and the turnstile 4,6 can compare the identifiers from the two portions after decryption, as shown in figure 5(b). If these do not match, this indicates that, e.g., the user of the mobile device 8 or some other party has tampered with the data packet 80 in the unencrypted portion (e.g. by corrupting the data, or by changing a device setting or application, or by obtaining data from another party or device, etc.) and thus e.g. further security checks should be made by the system to ensure whether the transaction is valid and should be authenticated.

It can be seen from the above that the present invention, in its preferred embodiments at least, provides a method and system for authenticating a mobile device for entry to an ecosystem or the like and providing selected information to the mobile device is response to the authentication. This provides an improved authentication transaction experience for the user of the mobile device and facilitates the accessing of systems, services and other information targeted or otherwise selected as being of interest or assistance to the user.

## Claims

1. A method of selecting information, the method comprising:
attempting to authenticate a mobile device at an authentication point; and
in response to the authentication attempt, selecting information for provision to the mobile device.

2. The method of claim 1, wherein at least one device remote from the authentication point provides the selected information to the mobile device.

3. The method of claim 2, further comprising the step of:
determining when the mobile device is within communications range of the remote device and wherein the remote device provides the selected information to the mobile device when it is determined that the mobile device is within communications range.

4. The method of any preceding claim, wherein the step of selecting information for provision to the mobile device comprises:
determining information about, or relating to, at least one of the mobile device, the authentication point and/or the authentication attempt therebetween; and
selecting information for provision based at least partially on the determined information, the method preferably further comprising the step of:
customising or otherwise modifying the selected information based at least partially on the determined information.

5. The method of claim 4, wherein the information about, or relating to, at least one of the mobile device, the authentication point and/or the authentication attempt therebetween comprises at least one of:
the location of the authentication point; the type of authentication; the purpose for which the mobile device is attempting authentication; whether or not the authentication attempt successfully authenticates the mobile device; the present location of the mobile device; the previous locations of the mobile device; the present attempted and/or previous transactions or authentications of, or relating to, the mobile device; preferences stored on, or in relation to, the mobile device; the specification of the mobile device; and the capabilities and/or functions of, or available to, the mobile device.

6. The method of any preceding claim comprising the steps of:
receiving at the mobile device selected information provided by at least one of the authentication point and a or the remote device; and
processing the received information at the mobile device, wherein the step of processing the received information at the mobile device comprises at least one of:
activating at least one application of, or available to, the mobile device;
displaying information relating to the received information on a display of the mobile device; and
activating means of, or available to, the mobile device for obtaining further information on demand.

7. The method of any preceding claim, wherein the authentication point comprises or is comprised within means for selectively permitting or prohibiting entry to an environment or ecosystem; and the method further comprises the step of:
in response to a successful authentication of the mobile device, controlling the means for selectively permitting or prohibiting entry such that entry to the environment or ecosystem is permitted.

8. Authentication means comprising:
means for attempting to authenticate a mobile device; and
means for selecting information for provision to a mobile device in response to an attempt to authenticate the mobile device.

9. The authentication means of claim 8, wherein the authentication means comprises an authentication point, preferably a turnstile, barrier or other means for preventing entry to a location, environment or ecosystem, and wherein:
the authentication point activates to allow entry to a location, environment or ecosystem in response to a successful authentication of a mobile device.

10. The authentication means of claim 8 or 9, further comprising:
transmissions means for providing the selected information to a mobile device automatically in response to an attempt to authenticate the mobile device.

11. A system for selecting information for provision to a mobile device comprising:
at least one authentication point, the authentication point comprising authentication means for attempting to authenticate a mobile device; and
selection means for selecting information for provision to a mobile device in response to an attempt to authenticate the mobile device at an authentication point.

12. The system of claim 11, further comprising:
transmission means for providing selected information to a mobile device, preferably wherein the transmissions means is comprised within at least one of:
an authentication point, wherein the transmissions means provides the selected information to a mobile device automatically in response to an attempt to authenticate the mobile device at an authentication point; and
a remote device, wherein the transmissions means attempts to provide the selected information to a mobile device periodically, or when the mobile device is determined to be within transmissions range of the remote device.

13. The system of claim 11 or 12, wherein:
the selection means is comprised within at least one of the authentication point, the or an authentication server, and the or a network with which the system is capable of communicating; and
information for provision to a mobile device is selected based at least partially on at least one or more of: the location of the authentication point; the type of authentication interaction; the purpose for which a mobile device is attempting authentication; whether or not an authentication attempt successfully authenticates a mobile device; the present location of a mobile device; the previous locations of a mobile device; the present attempted and/or previous transactions or authentications of, or relating to, a mobile device; preferences stored on, or in relation to, a mobile device; the specification of a mobile device; and the capabilities and/or functions of, or available to, a mobile device.

14. A system for providing information to a mobile device comprising:
at least one master authentication point comprising authentication means for attempting to authenticate a mobile device;
at least one slave authentication point comprising authentication means for attempting to authenticate a mobile device; and
selection means for selecting information for provision to a mobile device in response to an attempt to authenticate the mobile device at a master or slave authentication point,
wherein each of the master and slave authentication points comprises means for communicating with at least one of the other master and slave authentication points.

15. A module for a mobile device, the module comprising:
wireless communications means for secure wireless communication with an authentication point;
at least one applications module, for activating one or more applications of the mobile device;
means for receiving information from an authentication point for activating one of more of the applications of, or for use with, the applications module; and
means for connecting with a mobile device such that interaction between the module means and the mobile device is enabled.
